# EUROPEAN PATENT SPECIFICATION

(11) **EP 3 802 047 B1**
(45) Date of publication and mention of the grant of the patent: **11.10.2023**
(21) Application number: 19727354.3
(22) Date of filing: 27.05.2019
(51) Int. Cl.: B29C 45/14, B60J 1/00, B29C 45/16

(54) **WINDOW UNIT COMPRISING A GLAZING PANEL AND A FRAME**
FENSTEREINHEIT MIT EINER GLASSCHEIBE UND EINEM RAHMEN
UNITÉ DE FENÊTRE COMPRENANT UN PANNEAU DE VITRAGE ET UN CADRE

(30) Priority: 31.05.2018 EP 18175307
(43) Date of publication of application: 14.04.2021
(73) Proprietor: AGC Glass Europe, 1348 Louvain-La-Neuve (BE)
(72) Inventor: HICK, Robert, 4032 Chênée (BE); LEMOINE, Adrien, 1490 Court-Saint-Etienne (BE)
(74) Representative: AGC Glass Europe
(86) International application number: PCT/EP2019/063661
(87) International publication number: WO 2019/228987

(56) References cited:
- DE-A1-102006 050 756
- DE-B3-102012 013 340
- FR-A1- 2 608 668

## Description

### Technical Field

The present invention relates to a window unit for windows in motor vehicles and the like, comprising a glazing panel with a frame which has a frame profile and surrounding the edge of the window on at least two peripheral sides, wherein the frame grips the window or surrounds the window on at least two peripheral sides in the form of a ring which is enclosed in itself, and the frame comprises a rigid material.

### Background Art

The injection of a rigid material around a glazing panel can cause one of the major drawbacks is the presence of permanent force applied to the glazing panel. This effort is caused by the shrinkage related to the injection process of the rigid material on the glazing panel and especially when the rigid material is injected on the major part of peripheral sides of the glazing panel and due to the shrinkage of the rigid material during the cooling step of the process of making the window unit.

These forces cause deformations of the glazing panel and therefore of the window unit. It is a reason why it is not easy to obtain for this kind of unit a correct dimensioning meeting specifications requested by car manufacturers.

A solution is to take account of these induced deformations to define the shape and dimensions of the tools used for the production of the window unit and for the injection of the rigid material. However, this solution generally requires the manufacture of a prototype mold used to inject parts that are subsequently measured in order to determine the value of these deformations. After that, on the basis of these measurements, compensations to be integrated into the series tools are defined in order to obtain dimensionally correct pieces in production. These steps are nevertheless long and expensive.

Moreover, even if this compensation step makes it possible to obtain dimensionally acceptable window units, it does not remove mechanical stresses existing in the glazing panel related to the applied forces.

The existence of these constraints can be managed into the window unit if the glazing panel has a high level of resistance to constraints such as tempered glass.

On the other hand, knows encapsulation methods does not allow to encapsulate laminated glass because they have a much lower mechanical strength limit than tempered glass and therefore this cannot resist to the encapsulation of a rigid material surrounding it in the long term.

DE102006050756 describes a window unit comprising a glazing panel, a frame which has a frame profile and encompasses the edge of the glazing panel on at least two peripheral sides, and grips the glazing panel or encompasses the glazing panel on at least two peripheral sides in the form of a ring and the frame comprises a primary part which is in the form of a hard component primary part of the frame comprises at least one constraints releasing mean.

DE102012013340 discloses a pane fastener for fastening and/or sealing a pane on a body part or other part of a motor vehicle.

### Summary of invention

It is an object of the present invention to alleviate these problems, and to provide a window unit with a frame providing less constraint on the glazing panel.

According to a first aspect of the invention, the invention relates to an improved window unit comprising a glazing panel, a frame which has a frame profile and encompasses the edge of the glazing panel on at least two peripheral sides, and grips the glazing panel or encompasses the glazing panel on at least two peripheral sides in the form of a ring and the frame comprises a primary part which is in the form of a hard component.

The invention relates also to a method to produce a window unit according to a first aspect of the invention comprising a step to overmold the at least one constraints releasing mean with the primary part on the glazing panel or a step to inject the at least one constraints releasing mean and the primary part on the glazing panel.

The invention relates also to a mold to produce a window unit according to a first aspect of the invention comprising a part to create at least one constraints releasing mean on the frame.

The solution as defined in the first aspect of the present invention is based on the primary part of the frame comprises at least one constraints releasing mean. The at least one constraints releasing mean is able to be deformed under the effect of shrinkage of the primary part. This deformation of the at least one constraints releasing mean reduces forces applied on the glazing panel by the primary part. Thus, induced deformations are reduced on the glazing panel and the window unit can keep the desired dimensions.

Preferably, the primary part is injected on the glazing panel. In other word, the glazing panel is at least partially overmolded by the primary part. In one embodiment, the at least one constraints releasing mean comprises at least one notch. The primary part around this notch is able to shrink by spreading the edge of the notch. Then, induced deformations are reduced on the glazing panel and the window unit can keep the desired dimensions.

In another embodiment, the at least one constraints releasing mean comprises at least one bridge. The at least one bridge can keep the primary part in a single piece and reinforce locally the primary part to avoid to create a gap between the primary part and the glazing panel. Preferably, the at least one bridge has at least one curvature shape and more preferably has a two inverted curvatures. The curvature acts as a spring to allow the primary part to shrink and to minimize induced deformations on the glazing panel while keeping locally the primary part on the glazing panel. The at least on bridge can be on the notch in order to add up benefits of the notch and the bridge.

In another embodiment, at least one bridge of the at least one constraints releasing mean has a higher height than the thickness of primary part near the constraints releasing mean to increase locally the rigidity of the primary part.

In one embodiment, the at least one constraints releasing mean can have a T-like shape design where the T is oriented towards the centre of the window unit. In this case, the constraints releasing mean is made by a recess or a narrow notch and an at least one bridge that is forming the T-like shape. In another embodiment, constraints releasing mean can have a H-like shape comprising two bridges with at least one curvature shape and a recess between both bridges. The recess can be produced by a non-encapsulated part meaning that no hard material is present.

Different kind of shapes and/or height can be used in a window unit to optimize the releasing effect, the reinforcement, the design and the manufacturing process.

In one embodiment of the invention, the primary part is in direct contact with the glazing panel meaning that the primary part is injected on the glazing panel. The glazing panel can have locally a bonding agent or primer material to ensure tightness and/or to promote the encapsulation of the primary part on the glazing panel.

The primary part can be overmolded on the glazing panel. To facilitate the process, the primary part can be injected into a mold to be encapsulated on the glazing panel. Preferably, the at least one constraints releasing mean is created during the injection of the primary part.

Preferably to optimize the process and to reduce the price, the bridge of at least one constraints releasing mean is made of the same component than the primary part.

In a preferred embodiment, the hard component is a polypropylene based material. Other hard materials, with a young modulus higher than 1000 MPa, as polyamide, styrenic and others can be also used.

In one embodiment of the invention, the frame comprises an secondary part which is in the form of soft component, placed at least partially over the primary part. The secondary part allows to thigh the window unit on the structure where it is fixed. Such structure can be a car body, a building,...

The secondary part can be injected in a second step over at least partially the primary part. Preferably, the secondary part is a single part. In some embodiments, the secondary part can be locally in contact with the glazing panel to ensure the aesthetic and the tightness of the window unit.

In another embodiment, at least a portion of the secondary part is in contact with the glazing panel and preferably at least in contact with the glazing panel at the level of the at least one constraints releasing mean.

In a preferred embodiment, the soft component is a thermoplastic elastomer based material. Styrenic based and vulcanized thermoplastics elastomer are generally used. The soft component is in another embodiment a soft polyvinyl chloride.

The glazing panel can be a flat or curved panel to fit with the design of the car. The glazing panel can be processed, ie annealed, tempered,... to respect with the specifications of security and anti-thief requirements. A heatable system, for example a coating or a network of wires, can be applied on the glazing panel to add a defrosting and/or a demisting function for example.

In one embodiment, the glazing panel is a glass panel. The glass panel comprises at least one glass sheet.

In another embodiment, due to reduction of induced deformations on the glazing panel, the glazing panel can be a laminated glass panel. The laminated glazing comprises glass sheets maintained by one or more interlayers positioned between glass sheets. The interlayers employed are typically polyvinyl butyral (PVB) or ethylene-vinyl acetate (EVA) for which the stiffness can be tuned. These interlayers keep the glass sheets bonded together even when broken in such a way that they prevent the glass from breaking up into large sharp pieces.

The glass sheet can be a clear glass or a coloured glass, tinted with a specific composition of the glass or by applying a coating or a plastic layer for example.

In the case of a laminated glass panel, it could be advantageous to have varying thicknesses of glass sheets to reduce weight and noise. Due to of induced deformations on the glazing panel, thin glass sheets with a thickness less than 1mm can be used without be bent or deformed. Thus, such thin glass sheet can keep the desired design.

To produce a window unit as described, the method comprises a step to overmold the at least one constraints releasing mean (103, 303, 313, 323, 403, 413, 423, 503, 603) with the primary part (102a, 302a, 312a, 323a, 402a, 412a, 422a, 502a, 602a) on the glazing panel (101) or a step to inject the at least one constraints releasing mean (103, 303, 313, 323, 403, 413, 423, 503, 603) and the primary part (102a, 302a, 312a, 323a, 402a, 412a, 422a, 502a, 602a) on the glazing panel (101).

Avantageously, a specific mold comprising a part to create at least one constraints releasing mean on the frame is used during the process. This mold can have a part of a cavity to create the bridge of the constraint releasing mean and/or an element to create the recess or the notch. Another mold can have a part where constraint releasing mean is inserted to be overmolded with the glazing panel by the primary part.

The window unit of the present invention may be arranged in a window frame or a door frame.

It is noted that the invention relates to all possible combinations of features recited in the claims.

The following description relates to an automotive window unit but it's understood that the invention may be applicable to others fields like architectural windows which may provide an encapsulation surrounding the edge of the window on at least two peripheral sides.

### Brief description of drawings

This and other aspects of the present invention will now be described in more detail, with reference to the appended drawings showing various exemplifying embodiments of the invention which are provided by way of illustration and not of limitation. The drawings are a schematic representation and not true to scale. The drawings do not restrict the invention in any way. More advantages will be explained with examples.
FIG. 1 is a schematic view of a window unit according to an exemplifying embodiment of the present invention.
FIG. 2 is a schematic view of a window unit according to another exemplifying embodiment of the present invention wherein the frame comprises an secondary part which is in the form of soft component.
FIG. 3a, 3b and 3c are schematic views of a constraints releasing mean according to another exemplifying embodiment of the present invention.
FIG. 4a, 4b and 4c are schematic views of a constraints releasing mean according to another exemplifying embodiment of the present invention wherein the frame comprises an secondary part which is in the form of soft component.
FIG. 5 is a sectional view A-A' of a window unit according to another exemplifying embodiment of the present invention.
FIG. 6 is a schematic view of a portion with constraints releasing means of a window unit according to another exemplifying embodiment of the present invention.

### Description of embodiments

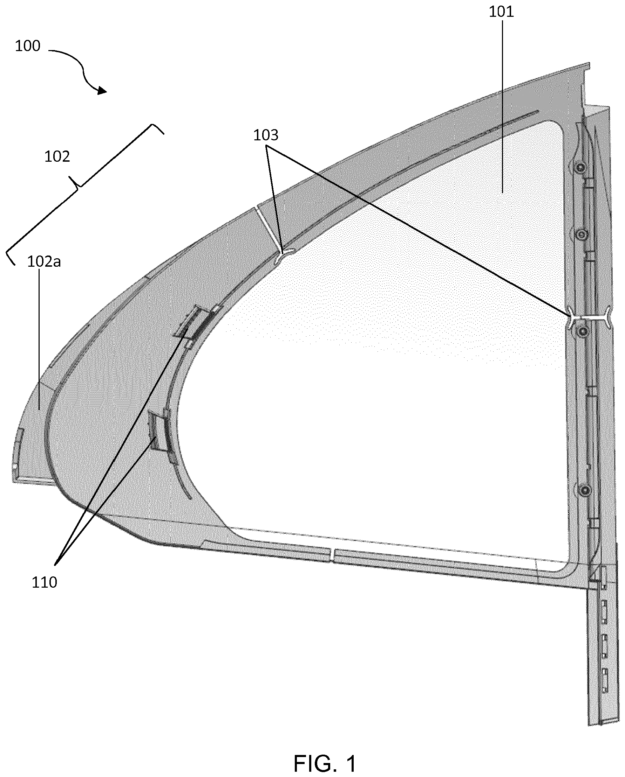

With reference to FIG. 1, a first embodiment of the present invention is described.

FIG. 1 shows a window unit 100 comprising a glazing panel 101, a frame 102 which has a frame profile and encompasses the edge of the glazing panel 101 on at least two peripheral sides, and grips the glazing panel 101 or encompasses the glazing panel 101 on at least two peripheral sides in the form of a ring which is enclosed in itself and the frame 102 comprises a primary part 102a is in the form of a hard component. The primary part of the frame 102 comprises at least one constraints releasing mean 103 and in particular two constraints releasing means 103. The hard material is a polypropylene based material.

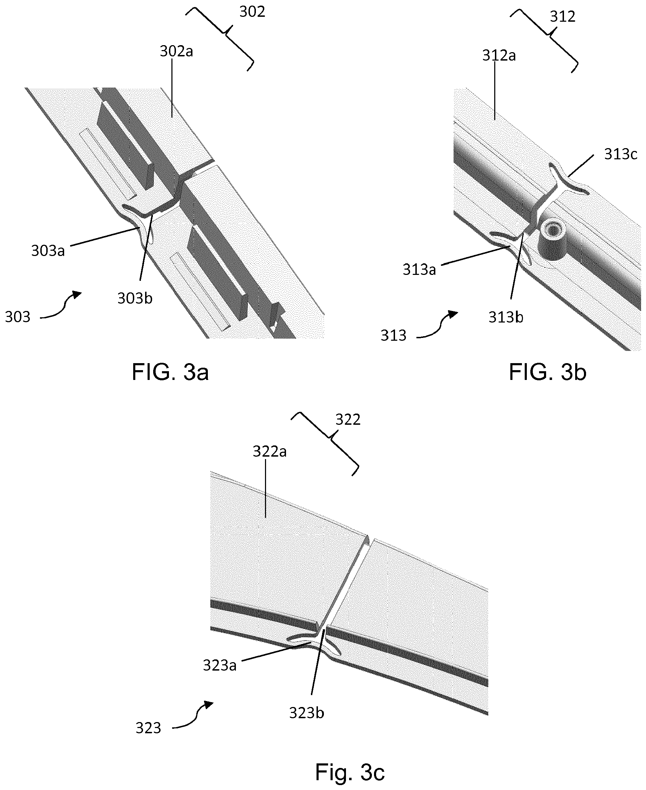

One of the constraints releasing means has a T-like shape where the T is in this particular embodiment oriented towards the centre of the window unit. In this case, the constraints releasing mean is made by a recess and an at least one bridge with a single curvature shape but a bridge with a multi curvature shape can be used. The other constraints releasing mean has a H-like shape comprising two bridges with a single curvature shape and a recess between both elements. The recess can be produced by a non-encapsulated part meaning that no hard material is present. Particular embodiments of such constraints releasing means are shown in FIG. 3a, 3b, 3c.

Fixing elements 110 able to fix the window unit 100 to another element like a car body, a decorative object, a door frame,.... Fixing elements 110 are fixed on the frame within the primary part 102a. In one embodiment, fixing elements are overmolded with the primary part 102a. In another embodiment, fixing elements are injected with the primary part. Others fixing elements like a division bar can be used.

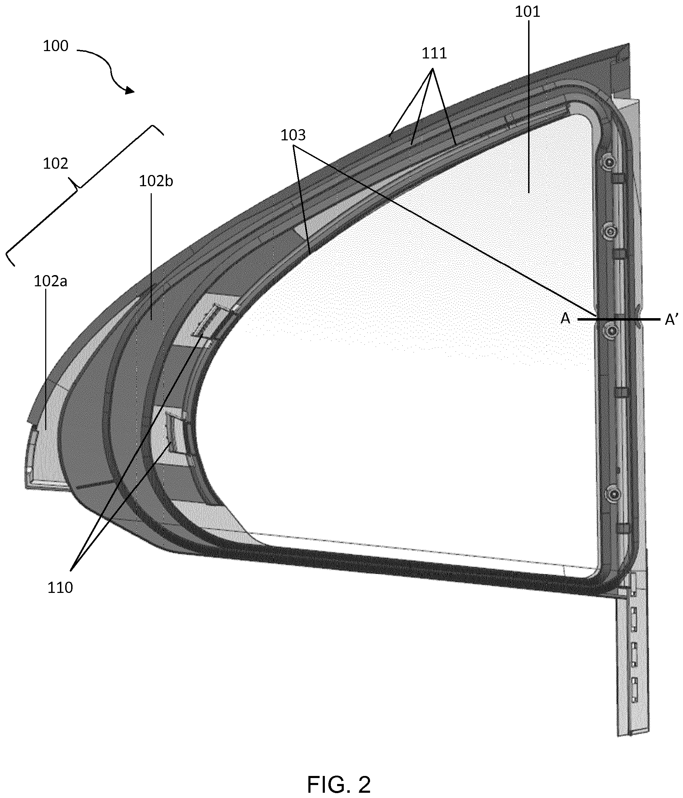

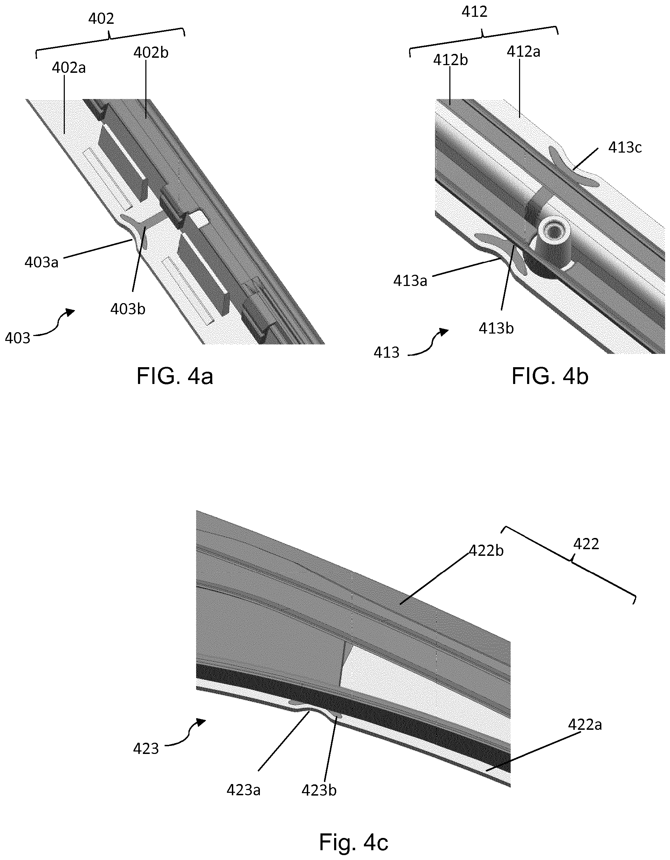

Fig. 2 shows a window unit 100 as described in Fig. 1 with a secondary part 102b. The secondary part 102b is in the form of soft component, placed at least partially over the primary part. The soft material is a thermoplastic elastomer based material. In this embodiment, the secondary part 102b is placed partially over the primary part 102a and partially in contact with the glazing panel 101 at the level of the constraints releasing means. The secondary part 102b can be in contact with the glazing panel 101 at least partially at the inner periphery of the primary part 102a to hide the primary part 102a and to ensure the tightness. Particular and not limitative embodiments of such constraints releasing means with soft material on them are shown in FIG. 4a, 4b, 4c.

The secondary part 102b has a specific design with lips 111 to ensure tightness between the window unit 100 and another element fixed by fixing elements 103 like the car body.

Fig.3a, 3b, 3c show particular embodiments of constraints releasing means 303, 313, 323.

Fig 3a shows a constraints releasing mean 303 with a T-like shape oriented towards the centre of the window unit. The constraints releasing mean 303 comprises a bridge 303a and a recess 303b. The bridge 303a has a single curvature shape and is injected with the primary part 302a. The recess has no hard material and is in the form of a slit from the bridge 303a to the end of the primary part 302a of the edge of the glazing panel.

Fig 3b shows a constraints releasing mean 313 with a H-like shape. The constraints releasing mean 313 comprises two bridges 313a, 313c and a recess 313b. Bridges 313a have a single curvature shape and are injected with the primary part 312a. The recess has no hard material and is in the form of a slit from the bridge 313a to the other bridge 313c.

Fig 3c shows a constraints releasing mean 323 with a T-like shape oriented towards the centre of the window unit. The constraints releasing mean 323 comprises a bridge 323a and a recess 323b. The bridge 323a has a single curvature shape and is injected with the primary part 322a. The recess has no hard material and is in the form of a slit from the bridge 323a to the end of the primary part 322a of the edge of the glazing panel.

Constraints releasing means can be made by a specific mold avoiding the hard material to encapsulated recesses303b, 313b, 323b of the constraints releasing mean and encapsulated the at least on bridges 303a, 313a, 313c, 323a.

Fig.4a, 4b, 34c show particular embodiments of constraints releasing means 403, 413, 423.

Fig 4a shows a constraints releasing mean 403 with a T-like shape oriented towards the centre of the window unit. The constraints releasing mean 403 comprises a bridge 403a and a recess 403b. The bridge 403a has a single curvature shape and is injected with the primary part 402a. The recess has no hard material and is in the form of a slit from the bridge 403a to the end of the primary part 402a of the edge of the glazing panel. A secondary part 402b is over a part of the primary part 402a and fill the recess 403b of the constraints releasing mean 403.

Fig 4b shows a constraints releasing mean 413 with a H-like shape. The constraints releasing mean 413 comprises two bridges 413a, 413c and a recess 413b. Bridges 413a have a single curvature shape and are injected with the primary part 412a. The recess has no hard material and is in the form of a slit from the bridge 413a to the other bridge 413c. The recess has no hard material and is in the form of a slit from the bridge 413a to the end of the primary part 412a of the edge of the glazing panel. A secondary part 412b is over a part of the primary part 412a and fill the recess 413b of the constraints releasing mean 413.

Fig 4c shows a constraints releasing mean 423 with a T-like shape oriented towards the centre of the window unit. The constraints releasing mean 423 comprises a bridge 423a and a recess 423b. The bridge 423a has a single curvature shape and is injected with the primary part 422a. The recess has no hard material and is in the form of a slit from the bridge 423a to the end of the primary part 422a of the edge of the glazing panel. The recess has no hard material and is in the form of a slit from the bridge 423a to the end of the primary part 422a of the edge of the glazing panel. A secondary part 422b is over a part of the primary part 422a and fill the recess 423b of the constraints releasing mean 423.

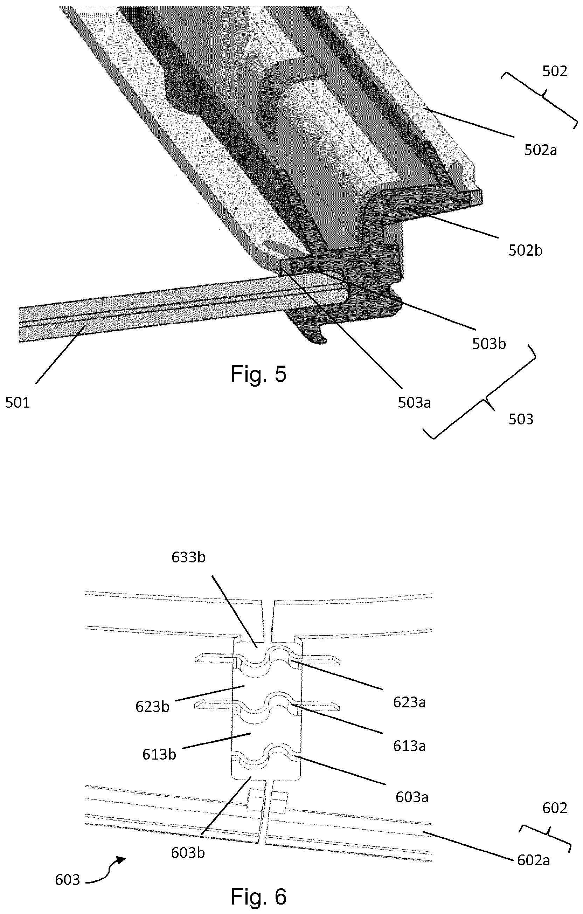

Fig. 5 shows a primary part 502 encompasses a laminated glass panel 501. A constraints releasing mean 503 is filled with the soft material of the secondary part 502b. The constraints releasing mean 403 has a T-like shape oriented towards the centre of the window unit. The constraints releasing mean 503 comprises a bridge 503a and a recess 503b. The bridge 503a has a single curvature shape and is injected with the primary part 502a.

Fig. 6 shows another embodiment of a constraints releasing mean 603 comprising three bridges 603a, 613a, 623a, recesses 603b, 613b, 623b, 633b. Two recess 613b, 623b are limited by the primary part 602a and by bridges 603a,613a, 623a. Two other recesses 603b and 633b have a notch toward the centre of the window unit for the 603b and toward the exterior for the 633b.

Bridges 603a, 613a, 623a have multi curvature shape and some bridges 613a, 623a have a higher height than the thickness of primary part 602a near the constraints releasing mean 603. In this particular embodiment, the over height of bridges 613b, 623b extend on the primary part 602.

In this embodiment, bridges 602a, 612a, 623a are injected with the primary part.

In some embodiment, bridges can have different height, different composition to optimize the releasing and the stiffness of the primary part on the glazing panel.

In some embodiment, the primary part 102a, 302a, 312a, 323a, 402a, 412a, 422a, 502a, 602a can have specific designs in order to fulfil with requirements and to stiffen the frame and the window unit 100. The secondary part 102b, 402b, 412b, 422b, 502b can have a specific design with lips, ... to tight the window unit 100.

## Claims

1. A window unit (100) comprising a glazing panel (101), a frame (102, 302, 312, 322, 402, 412, 422, 502, 602) which has a frame profile and encompasses the edge of the glazing panel (101) on at least two peripheral sides, and grips the glazing panel (101) or encompasses the glazing panel (101) on at least two peripheral sides in the form of a ring and the frame (102, 302, 312, 322, 402, 412, 422, 502, 602) comprises a primary part (102a, 302a, 312a, 323a, 402a, 412a, 422a, 502a, 602a) which is in the form of a hard component **characterized in that** the primary part (102a, 302a, 312a, 323a, 402a, 412a, 422a, 502a, 602a) of the frame (102, 302, 312, 322, 402, 412, 422, 502, 602) comprises at least one constraints releasing mean (103, 303, 313, 323, 403, 413, 423, 503, 603), **in that** the frame (102, 302, 312, 322, 402, 412, 422, 502, 602) comprises an secondary part (102b, 402b, 412b, 422b, 502b) which is in the form of soft component, placed at least partially over the primary part (102a, 302a, 312a, 323a, 402a, 412a, 422a, 502a, 602a), **in that** the primary part (102a, 302a, 312a, 323a, 402a, 412a, 422a, 502a, 602a) is in direct contact with the glazing panel (101), **in that** the glazing panel is a glass panel (101) and **in that** the at least one constraints releasing mean (103, 303, 313, 323, 403, 413, 423, 503, 603) comprises at least one notch.

2. A window unit (100) according to claim 1, wherein the glazing panel (101) is a laminated glass panel.

3. A window unit (100) according to any preceding claims, wherein the at least one constraints releasing mean (103, 303, 313, 323, 403, 413, 423, 503, 603) comprises at least one element.

4. A window unit (100) according to claim 3, wherein the at least one bridge of at least one constraints releasing mean (103, 303, 313, 323, 403, 413, 423, 503, 603) has at least one curvature shape.

5. A window unit (100) according to claim 4, wherein at least one element of the at least one constraints releasing mean (103, 303, 313, 323, 403, 413, 423, 503, 603) has a higher height than the thickness of primary part (102a, 302a, 312a, 323a, 402a, 412a, 422a, 502a, 602a) near the constraints releasing mean (103, 303, 313, 323, 403, 413, 423, 503, 603).

6. A windows unit (100) according to claims 3 to 5, the at least one bridge of the at least one constraints releasing mean (103, 303, 313, 323, 403, 413, 423, 503, 603) has a two inverted curvatures.

7. A window unit (100) according to claims 3 to 6, wherein the at least one bridge of the at least one constraints releasing mean (103, 303, 313, 323, 403, 413, 423, 503, 603) is made of the same component than the primary part (102a, 302a, 312a, 323a, 402a, 412a, 422a, 502a, 602a).

8. A window unit (100) according to any preceding claims, wherein the hard component is a polypropylene based material.

9. A window unit (100) according to claim 1, wherein the soft component is a thermoplastic elastomer based material.

10. Method to produce a window unit (100) according to claims 1 to 9, comprising a step to overmold the at least one constraints releasing mean (103, 303, 313, 323, 403, 413, 423, 503, 603) with the primary part (102a, 302a, 312a, 323a, 402a, 412a, 422a, 502a, 602a) on the glazing panel (101) or a step to inject the at least one constraints releasing mean (103, 303, 313, 323, 403, 413, 423, 503, 603) and the primary part (102a, 302a, 312a, 323a, 402a, 412a, 422a, 502a, 602a) on the glazing panel (101).

11. Mold to produce a window unit (100) according to claims 1 to 9, comprising a part to create at least one constraints releasing mean (103, 303, 313, 323, 403, 413, 423, 503, 603) on the frame.

## Patentansprüche

1. Fenstereinheit (100), umfassend eine Verglasungsscheibe (101), einen Rahmen (102, 302, 312, 322, 402, 412, 422, 502, 602), der ein Rahmenprofil hat und den Rand der Verglasungsscheibe (101) an mindestens zwei Umfangsseiten umfängt und die Verglasungsscheibe (101) ergreift oder die Verglasungsscheibe (101) an mindestens zwei Umfangsseiten in der Form eines Rings umfängt, wobei der Rahmen (102, 302, 312, 322, 402, 412, 422, 502, 602) einen primären Teil (102a, 302a, 312a, 323a, 402a, 412a, 422a, 502a, 602a) umfasst, der in der Form einer harten Komponente ist, **dadurch gekennzeichnet, dass** der primäre Teil (102a, 302a, 312a, 323a, 402a, 412a, 422a, 502a, 602a) des Rahmens (102, 302, 312, 322, 402, 412, 422, 502, 602) mindestens ein Haltefreigabemittel (103, 303, 313, 323, 403, 413, 423, 503, 603) umfasst, dass der Rahmen (102, 302, 312, 322, 402, 412, 422, 502, 602) einen sekundären Teil (102b, 402b, 412b, 422b, 502b) umfasst, der in der Form einer weichen Komponente ist und mindestens teilweise über dem primären Teil (102a, 302a, 312a, 323a, 402a, 412a, 422a, 502a, 602a) platziert ist, dass der primäre Teil (102a, 302a, 312a, 323a, 402a, 412a, 422a, 502a, 602a) in direktem Kontakt mit der Verglasungsscheibe (101) ist, dass die Verglasungsscheibe eine Glasscheibe (101) ist und dass das mindestens eine Haltefreigabemittel (103, 303, 313, 323, 403, 413, 423, 503, 603) mindestens eine Kerbe umfasst.

2. Fenstereinheit (100) nach Anspruch 1, wobei die Verglasungsscheibe (101) eine Verbundglasscheibe ist.

3. Fenstereinheit (100) nach einem der vorhergehenden Ansprüche, wobei das mindestens eine Haltefreigabemittel (103, 303, 313, 323, 403, 413, 423, 503, 603) mindestens ein Element umfasst.

4. Fenstereinheit (100) nach Anspruch 3, wobei die mindestens eine Brücke des mindestens einen Haltefreigabemittels (103, 303, 313, 323, 403, 413, 423, 503, 603) mindestens eine Krümmungsform hat.

5. Fenstereinheit (100) nach Anspruch 4, wobei mindestens ein Element des mindestens einen Haltefreigabemittels (103, 303, 313, 323, 403, 413, 423, 503, 603) eine Höhe hat, die in der Nähe des Haltefreigabemittels (103, 303, 313, 323, 403, 413, 423, 503, 603) größer als die Dicke des primären Teils (102a, 302a, 312a, 323a, 402a, 412a, 422a, 502a, 602a) ist.

6. Fenstereinheit (100) nach Ansprüche 3 bis 5, wobei die mindestens eine Brücke des mindestens einen Haltefreigabemittels (103, 303, 313, 323, 403, 413, 423, 503, 603) zwei invertierte Krümmungen hat.

7. Fenstereinheit (100) nach Ansprüchen 3 bis 6, wobei die mindestens eine Brücke des mindestens einen Haltefreigabemittels (103, 303, 313, 323, 403, 413, 423, 503, 603) aus derselben Komponente wie der primäre Teil (102a, 302a, 312a, 323a, 402a, 412a, 422a, 502a, 602a) hergestellt ist.

8. Fenstereinheit (100) nach einem der vorhergehenden Ansprüche, wobei die harte Komponente ein Material auf Polypropylenbasis ist.

9. Fenstereinheit (100) nach Anspruch 1, wobei die weiche Komponente ein Material auf der Basis eines thermoplastischen Elastomers ist.

10. Verfahren zur Herstellung einer Fenstereinheit (100) nach Ansprüchen 1 bis 9, umfassend einen Schritt des Überspritzens des mindestens einen Haltefreigabemittels (103, 303, 313, 323, 403, 413, 423, 503, 603) mit dem primären Teil (102a, 302a, 312a, 323a, 402a, 412a, 422a, 502a, 602a) auf der Verglasungsscheibe (101) oder einen Schritt zum Einspritzen des mindestens einen Haltefreigabemittels (103, 303, 313, 323, 403, 413, 423, 503, 603) und des primären Teils (102a, 302a, 312a, 323a, 402a, 412a, 422a, 502a, 602a) an der Verglasungsscheibe (101).

11. Form zur Herstellung einer Fenstereinheit (100) nach Ansprüchen 1 bis 9, umfassend einen Teil zur Erzeugung mindestens eines Haltefreigabemittels (103, 303, 313, 323, 403, 413, 423, 503, 603) an dem Rahmen.

## Revendications

1. Unité formant fenêtre (100) comprenant un panneau de vitrage (101), un cadre (102, 302, 312, 322, 402, 412, 422, 502, 602) qui présente un profil de cadre et entoure le bord du panneau de vitrage (101) sur au moins deux côtés périphériques, et enserre le panneau de vitrage (101) ou entoure le panneau de vitrage (101) sur au moins deux côtés périphériques sous la forme d'un anneau et le cadre (102, 302, 312, 322, 402, 412, 422, 502, 602) comprend une partie primaire (102a, 302a, 312a, 323a, 402a, 412a, 422a, 502a, 602a) qui est sous la forme d'un composant dur, **caractérisée en ce que** la partie primaire (102a, 302a, 312a, 323a, 402a, 412a, 422a, 502a, 602a) du cadre (102, 302, 312, 322, 402, 412, 422, 502, 602) comprend au moins un moyen de libération des contraintes (103, 303, 313, 323, 403, 413, 423, 503, 603), **en ce que** le cadre (102, 302, 312, 322, 402, 412, 422, 502, 602) comprend une partie secondaire (102b, 402b, 412b, 422b, 502b) qui est sous la forme d'un composant mou, placée au moins partiellement par-dessus la partie primaire (102a, 302a, 312a, 323a, 402a, 412a, 422a, 502a, 602a), **en ce que** la partie primaire (102a, 302a, 312a, 323a, 402a, 412a, 422a, 502a, 602a) est en contact direct avec le panneau de vitrage (101), **en ce que** le panneau de vitrage est un panneau de verre (101) et **en ce que** l'au moins un moyen de libération des contraintes (103, 303, 313, 323, 403, 413, 423, 503, 603) comprend au moins une encoche.

2. Unité formant fenêtre (100) selon la revendication 1, le panneau de vitrage (101) étant un panneau de verre feuilleté.

3. Unité formant fenêtre (100) selon l'une quelconque des revendications précédentes, l'au moins un moyen de libération des contraintes (103, 303, 313, 323, 403, 413, 423, 503, 603) comprenant au moins un élément.

4. Unité formant fenêtre (100) selon la revendication 3, l'au moins un pont de l'au moins un moyen de libération des contraintes (103, 303, 313, 323, 403, 413, 423, 503, 603) ayant au moins une forme de courbure.

5. Unité formant fenêtre (100) selon la revendication 4, au moins un élément de l'au moins un moyen de libération des contraintes (103, 303, 313, 323, 403, 413, 423, 503, 603) ayant une hauteur supérieure à l'épaisseur de la partie primaire (102a, 302a, 312a, 323a, 402a, 412a, 422a, 502a, 602a) près du moyen de libération des contraintes (103, 303, 313, 323, 403, 413, 423, 503, 603) .

6. Unité formant fenêtre (100) selon les revendications 3 à 5, l'au moins un pont de l'au moins un moyen de libération des contraintes (103, 303, 313, 323, 403, 413, 423, 503, 603) ayant deux courbures inversées.

7. Unité formant fenêtre (100) selon les revendications 3 à 6, l'au moins un pont de l'au moins un moyen de libération des contraintes (103, 303, 313, 323, 403, 413, 423, 503, 603) étant fabriqué à partir du même composant que la partie primaire (102a, 302a, 312a, 323a, 402a, 412a, 422a, 502a, 602a).

8. Unité formant fenêtre (100) selon l'une quelconque des revendications précédentes, le composant dur étant un matériau à base de polypropylène.

9. Unité formant fenêtre (100) selon la revendication 1, le composant mou étant un matériau à base d'élastomère thermoplastique.

10. Procédé pour produire une unité formant fenêtre (100) selon les revendications 1 à 9, comprenant une étape de surmoulage de l'au moins un moyen de libération des contraintes (103, 303, 313, 323, 403, 413, 423, 503, 603) avec la partie primaire (102a, 302a, 312a, 323a, 402a, 412a, 422a, 502a, 602a) sur le panneau de vitrage (101) ou une étape d'injection de l'au moins un moyen de libération des contraintes (103, 303, 313, 323, 403, 413, 423, 503, 603) et de la partie primaire (102a, 302a, 312a, 323a, 402a, 412a, 422a, 502a, 602a) sur le panneau de vitrage (101).

11. Moule pour produire une unité formant fenêtre (100) selon les revendications 1 à 9, comprenant une partie pour créer au moins un moyen de libération des contraintes (103, 303, 313, 323, 403, 413, 423, 503, 603) sur le cadre.
